# EUROPÄISCHE PATENTANMELDUNG

(11) **EP 4 030 542 A1**
(43) Veröffentlichungstag der Anmeldung: **20.07.2022**
(21) Anmeldenummer: 21207884.4
(22) Anmeldetag: 12.11.2021
(51) Int. Cl.: H01M 50/209, H01M 50/244, H01M 50/249, H01M 50/264, H01M 50/271, B61C 17/00, B60L 50/64

(54) **AUFNAHMEBEHÄLTER FÜR ELEKTRISCHE KOMPONENTEN, INSBESONDERE BATTERIECONTAINER**

(30) Priorität: 14.01.2021 DE 102021100671
(71) Anmelder: Dessauer Schaltschrank- und Gehäusetechnik GmbH, 06846 Dessau (DE)
(72) Erfinder: Ludwig, Daniel, 12487 Berlin (DE); Kupka, Philip, 06846 Dessau (DE)
(74) Vertreter: Duda, Rafael Thomas

(57) **Zusammenfassung**

Die vorliegende Erfindung betrifft einen Aufnahmebehälter (100) für elektrische Komponenten, welcher in einem unterseitigen Bereich eines Schienenfahrzeugs anbringbar ist, wobei der Aufnahmebehälter (100) einen Blechkorpus umfasst mit einer Längsseite und einer schmaleren Querseite, wobei dieser Blechkorpus durch horizontale Längsstreben (107, 118) und horizontale Querstreben (106, 106a) verstärkt ist und wobei der Innenraum des Aufnahmebehälters ein Aufnahmevolumen bildet, welches über Öffnungen zugänglich ist, die über Klappen oder dergleichen verschließbar sind, wobei die Öffnungen an der schmaleren Querseite vorgesehen sind und wobei die Seitenwände (112) an der Längsseite vorzugsweise einen etwa trapezförmigen, sich nach oben hin verbreiternden Umriss aufweisen. Bei dem erfindungsgemäßen Aufnahmebehälter ist das Behältergerüst aus Blechprofilschalen mit Abkantungen gefertigt, die durch eingeschweißte Streben verstärkt werden, so dass ein einfach und somit kostengünstig zu fertigender Aufnahmebehälter zur Verfügung gestellt wird, welcher eine hohe Stabilität und mechanische Belastbarkeit aufweist.

## Beschreibung

Die vorliegende Erfindung betrifft einen Aufnahmebehälter für elektrische Komponenten, welcher in einem unterseitigen Bereich eines Schienenfahrzeugs anbringbar ist, wobei der Aufnahmebehälter einen Blechkorpus umfasst mit einer Längsseite und einer schmaleren Querseite, wobei dieser Blechkorpus durch Längsstreben und Querstreben verstärkt ist und wobei der Innenraum des Aufnahmebehälters ein Aufnahmevolumen bildet, welches über Öffnungen zugänglich ist, die über Klappen oder dergleichen verschließbar sind. Derartige Aufnahmebehälter dienen dazu die Batterien oder Akkumulatoren sowie gegebenenfalls weitere Bauelemente für die Energieversorgung des Schienenfahrzeugs unterzubringen und werden daher auch als Batteriecontainer bezeichnet.

Ein derartiger Aufnahmebehälter wird beispielsweise in der DE 10 2013 110 637 A1 beschrieben. Dieser bekannte Aufnahmebehälter hat die kastenförmige Grundform eines Quaders und umfasst eine Tragvorrichtung im oberen Bereich zur Anbringung dem Schienenfahrzeug Der Innenraum des Aufnahmebehälters wird durch Trennwände in Aufnahmekammern unterteilt. Klappen, die geöffnet werden können befinden sich bei diesem bekannten Aufnahmebehälter an dessen Längsseite. An den Längsrändern im Bereich einer Deckwand des Aufnahmebehälters sind Tragschienen angeordnet, an denen wiederum Tragarme angebracht sind, über die der Aufnahmebehälter an dem Unterbau eines Waggons angebracht werden kann. Dies geschieht über Ausleger der Tragarme, die über Bolzen an dem Unterbau montiert werden. Die Tragschienen und die Tragarme befinden sich oberhalb des Aufnahmevolumens des Aufnahmebehälters, dessen Außenwände aus in den Randbereichen abgekanteten Blechen, die über Niet- oder Schweißverbindungen miteinander verbunden werden.

Die DE 10 2013 113 472 A1 beschreibt ein Aufnahme- und Tragsystem für Umrichter für Schienenfahrzeuge, bei denen die Aufnahmebehälter aus mehreren Modulen zusammengefügt sind. Die Module sind würfelförmig oder quaderförmig mit rechteckigen Grundrahmen und bestehen aus Winkelprofilen und Eckverbindern, wobei für deren Verbindung untereinander zahlreiche Nietverbindungen erforderlich sind. Zur Verkleidung des Profilgerüsts können abgekantete Bodenbleche und einfache Seitenbleche verwendet werden, wobei zur Verbindung der Bleche mit den Profilen ebenfalls Nietverbindungen eingesetzt werden. Kleinere würfelförmige Module können in einen größeren quaderförmigen Behälter eingefügt werden, wobei das einschieben der kleineren Module von der Längsseite des größeren Behälters her erfolgt. Aufgrund der zahlreichen erforderlichen Nietverbindungen ist die Herstellung eines derartigen Aufnahmebehälters mit einem großen Fertigungsaufwand verbunden.

Ausgehend von dem vorgenannten Stand der Technik besteht die Aufgabe der vorliegenden Erfindung darin, einen einfach und somit kostengünstig zu fertigenden Aufnahmebehälter zur Verfügung zu stellen, welcher eine hohe Stabilität und mechanische Belastbarkeit aufweist.

Die Lösung der vorgenannten Aufgabe liefert ein Aufnahmebehälter der eingangs genannten Art mit den Merkmalen des Anspruchs 1.

Die Grundidee besteht darin, ein Behältergerüst aus Blechprofilschalen mit Abkantungen zu fertigen, die durch eingeschweißte Streben verstärkt werden. Die flächigen Blechbauteile können so beispielsweise auf einer Stanz-Laser-Maschine gefertigt und mit den verstärkenden Streben verschweißt werden. Die Seitenwände an den Längsseiten können in das Behältergerüst integriert werden und müssen beispielsweise nicht mehr nachträglich angenietet werden. Sie können als Blechbiegeteile ausgeführt und beispielsweise oben und unten abgekantet und durch aufgeschweißte Profile versteift werden. Dieser Aufbau wird erfindungsgemäß dadurch möglich, dass nunmehr die Öffnungen für die einzuschiebenden Batterietröge nicht mehr an der Längsseite, sondern an der schmaleren Querseite vorgesehen sind.

Es wurde vor der Entwicklung des vorliegenden erfindungsgemäßen Aufnahmebehälters seitens der Anmelderin eine geschweißte Fachwerkkonstruktion aus unterschiedlich mechanisch bearbeiteten Hohlprofilen verwendet, deren Herstellung und Verschweißung jedoch sehr komplex und aufwändig war. Gegenüber einer Fachwerkkonstruktion stellt eine Blech-Biege-Konstruktion eine wesentlich kostengünstigere Technologie dar. Außerdem liefert die erfindungsgemäße konstruktive Lösung Aufnahmebehälter, die verglichen mit der früheren Fachwerkkonstruktion eine wesentlich höhere mechanische und dynamische Belastung erlauben.

Die Vorteile einer Blech-Biege-Konstruktion liegen insbesondere auch in einem vereinfachten Fertigungsprozess. Beispielsweise können die ersten Fertigungsschritte auf Stanz-Laser-Kombinations-Maschinen und einem Flachbettlaser durchgeführt werden, auf denen die benötigten Blech-Platinen von der Kontur bis hin zu den Umformungen hergestellt werden können. Es lassen sich verschiedene Blechtypen wie beispielsweise Schwarzblech, Chrom-Nickel-Stahlblech oder Aluminiumblech verarbeiten. Die Blechplatinen werden anschließend beispielsweise an Abkantpressen in einer Biegerei weiterbearbeitet. Danach erfolgt die weitere Bearbeitung durch Schweißvorgänge, die in der Regel in verschiedenen Schweißbereichen vorgenommen werden. Es kann hier zwischen den einzelnen oben genannten Blechmaterialtypen unterschieden werden. Anschließend werden die fertiggeschweißten Bauteile in der Regel lackiert, beispielsweise in einer Pulverlackieranlage. Danach erfolgen in der Regel noch Montagevorgänge, in denen die zuvor gefertigten Einzelteile zu den Aufnahmebehältern zusammengebaut werden.

Gemäß einer bevorzugten Weiterbildung der vorliegenden Erfindung weisen die Seitenwände an der Längsseite einen etwa trapezförmigen, sich nach oben hin verbreiternden Umriss aufweisen. Während im Stand der Technik die Aufnahmebehälter einen quaderförmigen Querschnitt aufwiesen, hat nun der Aufnahmebehälter die Grundform eines Prismas mit trapezförmiger Grundfläche, nämlich der Seitenfläche, wobei die obere Fläche, die der Unterkonstruktion des Schienenfahrzeugs zugewandt ist, an dem der Aufnahmebehälter befestigt wird, einen rechteckigen Umriss hat und aufgrund der Trapezform der Seitenflächen diese obere Fläche (Fläche des Deckelblechs) größer ist als die ebenfalls rechteckige Bodenfläche (Fläche des Bodenblechs) des Aufnahmebehälters.

Gemäß einer bevorzugten Weiterbildung der vorliegenden Erfindung ist der Aufnahmebehälter durch mindestens eine im Innenraum angeordnete vertikale Strebe verstärkt, welche von den Längsseitenwänden des Aufnahmebehälters beabstandet ist, vorzugsweise ist der Aufnahmebehälter durch zwei oder mehrere zueinander parallele, beabstandete vertikale Streben verstärkt, die in einer Längsreihe angeordnet sind. Insbesondere etwa in der Behältermitte weist der Aufnahmebehälter drei solcher vertikaler Streben auf, die hierin als Mittelstreben bezeichnet werden und die beispielsweise als Kastenprofil (rechteckiges Profil) ausgeführt werden können. Auf diese vertikalen Streben kann ein Deckelblech aufgeschweißt werden, um so jeweils ein geschlossenes Profil zu erhalten.

Der Aufnahmebehälter weist weiterhin vorzugsweise ein oder mehrere horizontale Querstreben auf, die ebenfalls beispielsweise als Kastenprofil ausgeführt werden können.

Derartige Querstreben können insbesondere an der vorderen und an der rückseitigen Querseitenwand im unteren Bereich vorgesehen sein, wobei die äußeren Querstreben an der unteren Seite des Behältergerüsts beispielsweise eine zusätzliche Abkantung erhalten können, wodurch sich Einschweißaugen einfacher positionieren lassen. Außerdem sind vorzugsweise im mittleren Bereich des Aufnahmebehälters, also etwa in der Mitte zwischen den beiden Querseiten, eine untere und/oder eine obere Querstrebe vorhanden. Gemäß einer bevorzugten Weiterbildung der vorliegenden Erfindung ist mindestens eine im Innenraum angeordnete vertikale Strebe mit einer unteren horizontalen Querstrebe und/oder mit einer oberen horizontalen Querstrebe des Aufnahmebehälters verbunden. Auf diese Weise erhält man ein stabiles Gerüst aus miteinander verbunden horizontalen Querstreben und vertikalen Streben, die die Blechkonstruktion aus den Seitenblechen an den Längsseiten, dem Bodenblech und dem Deckelblech verstärken. Weitere vertikale Streben können jeweils in der Nähe der längsseitigen Seitenbleche vorgesehen sein.

Gemäß einer bevorzugten Weiterbildung der vorliegenden Erfindung umfassen die Seitenwände an den Längsseiten des Aufnahmebehälters geschlossene Bleche, welche im oberen Endbereich und/oder im unteren Endbereich jeweils zweifach rechtwinklig zu Längsprofilen abgekantet sind. Durch diese Abkantungen werden die Bleche an den Längsseiten stabilisiert.

Gemäß einer bevorzugten Weiterbildung der vorliegenden Erfindung sind an der schmaleren Querseite vorzugsweise etwa rechteckige Türrahmen eingelassen, die über vorzugsweise schwenkbare Klappen verschließbar sind. In der Regel sind zwei solcher rechteckiger Türrahmen vorhanden, die zu einer Unterteilung des Aufnahmebehälters, in Querrichtung gesehen, in zwei Einschuböffnungen für die Batterietröge führen. Diese beiden durch die Türrahmen gebildeten Einschuböffnungen werden dann vorzugsweise über schwenkbare Klappen verschlossen. An diesen Klappen sind für die Schwenkbewegung Scharniere vorgesehen. Zur Entlüftung des Aufnahmebehälters können beispielsweise separat gefertigte Lufthutzen dienen, welche an den Klappen angeschweißt werden können Zur Gewährleistung des Brandschutzes können Platten aus einem geeigneten Brandschutzmaterial auf Verschlussbleche aufgebracht werden, die sich an den Klappen befinden. Zwischen die Klappen und die Verschlussbleche können weiterhin beispielsweise Filtermatten angebracht werden, um die durch die Lufthutzen der Klappen strömende Luft zu filtern.

Gemäß einer bevorzugten Weiterbildung der vorliegenden Erfindung sind an den Querseiten obere horizontale Querstreben angeordnet, an denen Haltewinkel mit horizontal nach außen ragenden Flächen angebracht sind, welche für die Befestigung an dem Schienenfahrzeug dienen. Diese Haltewinkel können insbesondere auf einer Stanz-Laser-Maschine gefertigt werden, wodurch die Position und Größe der jeweiligen Anbindungspunkte genau definiert ist. Anders als im Stand der Technik befinden sich somit diese Haltewinkel nicht an den Längsseiten des Aufnahmebehälters, sondern an den Querseiten und die Haltewinkel ragen auch bevorzugt nicht von der oberen Begrenzung des Aufnahmebehälters aus gesehen nach oben hin, sondern sie liegen etwa in der Ebene der oberen Enden des Blechgerüsts des Aufnahmebehälters. Sie sind so quasi in die Blechkonstruktion des Aufnahmebehälters integriert und werden aufgrund einer günstigen Einleitung der Kräfte mechanisch weniger stark beansprucht.

Gemäß einer bevorzugten Weiterbildung der vorliegenden Erfindung sind insgesamt wenigstens vier Haltewinkel an den Querseiten insbesondere jeweils in den Eckbereichen des Aufnahmebehälters angeordnet, vorzugsweise insgesamt sechs Haltewinkel, wobei insbesondere jeweils zwei oder drei Haltewinkel in einer Reihe liegend an je einer Querseite des Aufnahmebehälters angeordnet sind. Dabei ist vorzugsweise nicht jeder dieser Haltewinkel ein separates Bauteil, welches an der Blech-/Streben-Konstruktion des Aufnahmebehälters angebracht wird, sondern es wird gemäß einer bevorzugten Weiterbildung der vorliegenden Erfindung an jeweils einer Querseite des Aufnahmebehälters nur ein weitgehend über die Erstreckung der Querseite durchgehendes gestanztes Blechbauteil verwendet, welches mehrere, vorzugsweise alle Haltewinkel dieser Querseite umfasst und welches einen horizontalen Schenkel aufweist, an dem die Haltewinkel ausgebildet sind, sowie einen mit diesem verbundenen vertikalen Schenkel, wobei der horizontale

Der innenseitig liegende (zum Aufnahmebehälter hin gewandte) vertikale Schenkel des Bauteils mit den Haltewinkeln kann mit einer oberen horizontalen Strebe des Aufnahmebehälters verbunden sein, wodurch die Einleitung der Kräfte über die Haltewinkel in die Strebenkonstruktion des Aufnahmebehälters erreicht wird. Der Aufnahmebehälter kann im befestigten Zustand nahe an der Unterkonstruktion des Schienenfahrzeugs liegen, wodurch ungünstige Biegemomente vermieden werden.

Zur Erhöhung der Steifigkeit können beispielsweise in das genannte Blechbauteil, welches die Haltewinkel bildet, noch ein oder mehrere Knotenbleche eingeschweißt werden. Außerdem können die Scharnierhalter, die benötigt werden, um die Scharniere an den schwenkbaren Klappen am Aufnahmebehälter anzubringen, an den Haltewinkeln angebracht, insbesondere angeschweißt werden.

Gemäß einer bevorzugten Weiterbildung der vorliegenden Erfindung sind im Inneren des Aufnahmebehälters sich in Längsrichtung des Aufnahmebehälters erstreckende horizontale C-Schienen angeordnet, in die Batterietröge einschiebbar sind, für die die C-Schienen als Führung dienen. Die im Inneren des Aufnahmebehälters liegenden C-Schienen werden Bestandteil der Schweißkonstruktion des Aufnahmebehälters, wodurch aufwändige Montagevorgänge wie beispielsweise eine Schraubbefestigung entfallen. Zwecks Austausch der Batterietröge werden diese nach dem Öffnen der Klappen an der Querseite aus dem Aufnahmebehälter gezogen.

Gemäß einer bevorzugten Weiterbildung der vorliegenden Erfindung ist wenigstens eine C-Schiene an wenigstens einer vertikalen Mittelstrebe befestigt, wobei vorzugsweise zwei C.-Schienen beidseitig und zueinander spiegelverkehrt an wenigstens einer vertikalen Mittelstrebe befestigt sind. Der Aufnahmebehälter umfasst somit bevorzugt zwei in Längsrichtung einschiebbare Batterietröge, die parallel nebeneinander liegen, wobei jedem dieser Batterietröge jeweils zwei C-Schienen zugeordnet sind, die den Batterietrog beim Einschieben an beiden Seiten führen. Das Bauprinzip ist somit ähnlich wie bei in einen Schrank einschiebbaren Schubladen. Entsprechend können beispielsweise seitlich an den Batteriecontainern angebrachte Rollen dazu dienen, diese beim Einschieben in den C-Schienen zu führen.

Gemäß einer bevorzugten Weiterbildung der vorliegenden Erfindung ist im Endbereich wenigstens einer horizontalen C-Schiene ein Vorlegschuh angeordnet, welcher zur Sicherung eines eingeschobenen Batterietrogs dient und vorzugsweise teilweise in Längsrichtung in die C-Schiene hineinragt. Die Vorlegschuhe können als gekantete Blechteile ausgeführt sein und weisen vorzugsweise ein zusätzliches Blech im stirnseitigen Bereich auf, welches den Schrauben für die Befestigung des Vorlegschuhs als Verliersicherung dient. Die Vorlegschuhe können beispielsweise an Anschläge geschraubt werden, die wiederum an die C-Schienen angeschweißt werden.

Nachfolgend wird die vorliegende Erfindung anhand von Ausführungsbeispielen unter Bezugnahme auf die beiliegenden Zeichnungen näher beschrieben. Dabei zeigen:
Figur 1 eine perspektivische und teilweise explodierte Gesamtansicht eines erfindungsgemäßen Aufnahmebehälters;
Figur 2 eine perspektivische Ansicht eines teilweise demontierten Aufnahmebehälters;
Figur 3 einen Längsschnitt durch das Blechschalenprofilgerippe des Aufnahmebehälters;
Figur 4 eine Draufsicht auf den Aufnahmebehälter;
Figur 5 eine Ansicht auf die Querseite des Aufnahmebehälters von Figur 3;
Figur 6 eine Querschnittansicht durch den Aufnahmebehälter entlang der Linie VI-VI von Figur 4;
Figur 7 eine Längsschnittansicht durch den Aufnahmebehälter entlang der Linie VII-VII von Figur 4;
Figur 8 eine weitere Längsschnittansicht durch den Aufnahmebehälter entlang der Linie VIII-VIII von Figur 4;
Figur 9 eine perspektivische Ansicht der Längsseitenwand des Aufnahmebehälters mit den entsprechenden Streben;
Figur 10 eine perspektivische Ansicht der Längsseitenwand des Aufnahmebehälters, ähnlich wie in Figur 9 aber ohne die Streben;
Figur 11 a eine perspektivische Ansicht eines Vorlegschuhs;

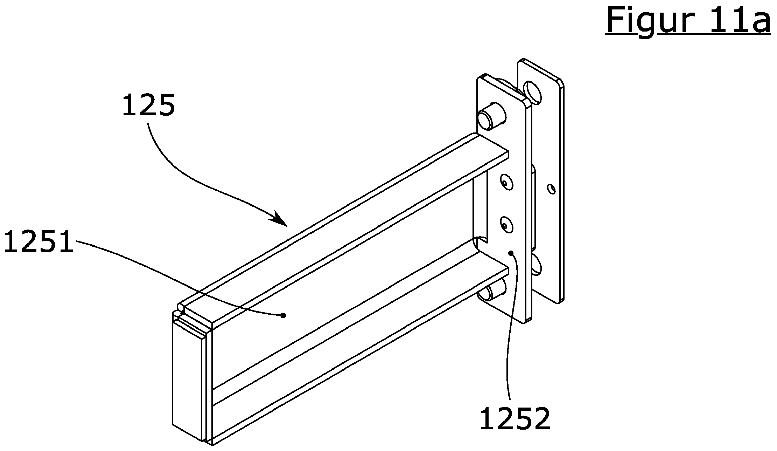

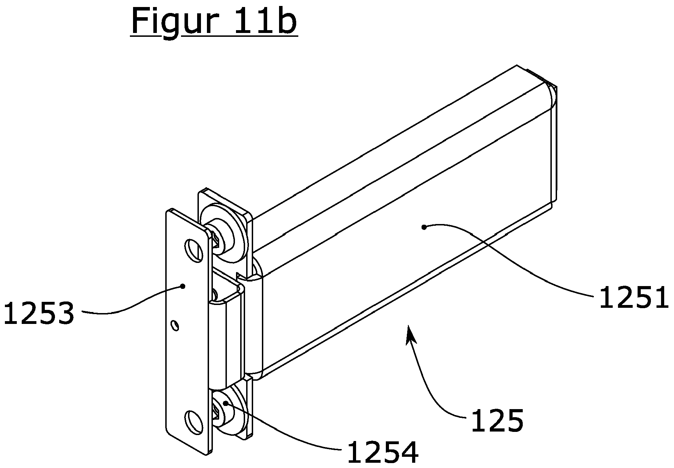

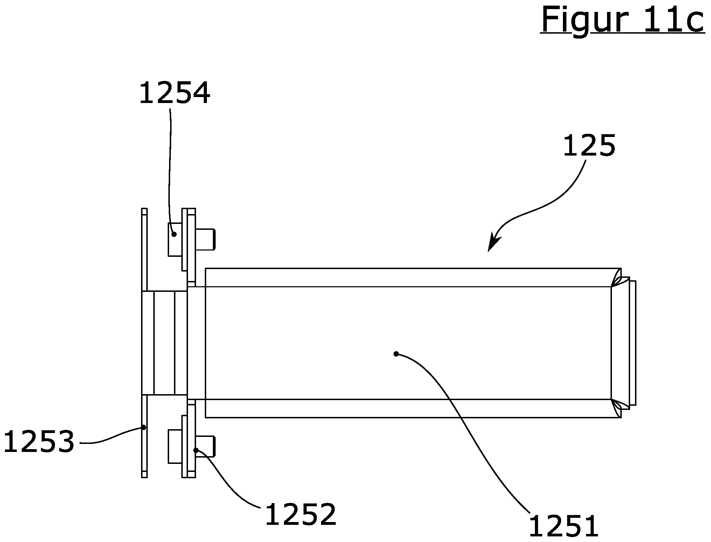

Figur 11 b eine weitere perspektivische Ansicht des Vorlegschuhs;
Figur 11 c eine Seitenansicht des Vorlegschuhs;

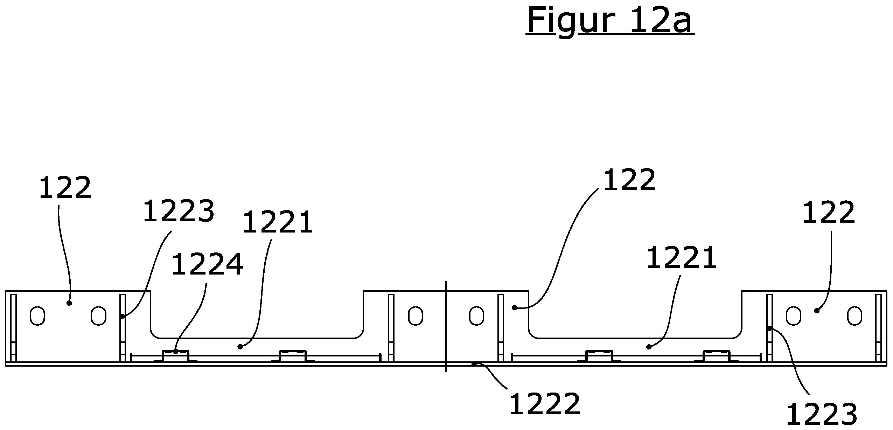

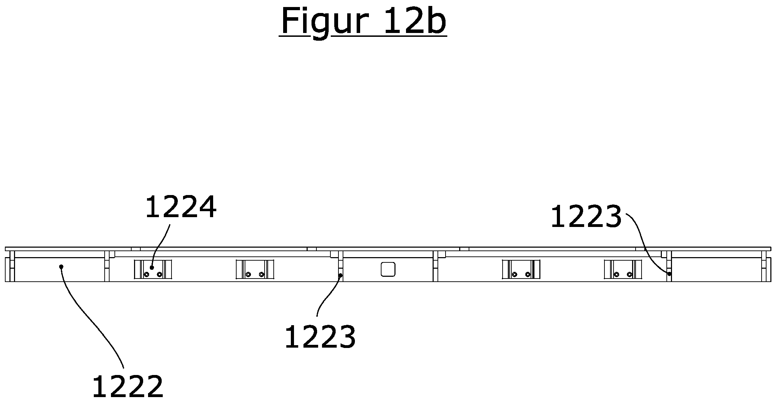

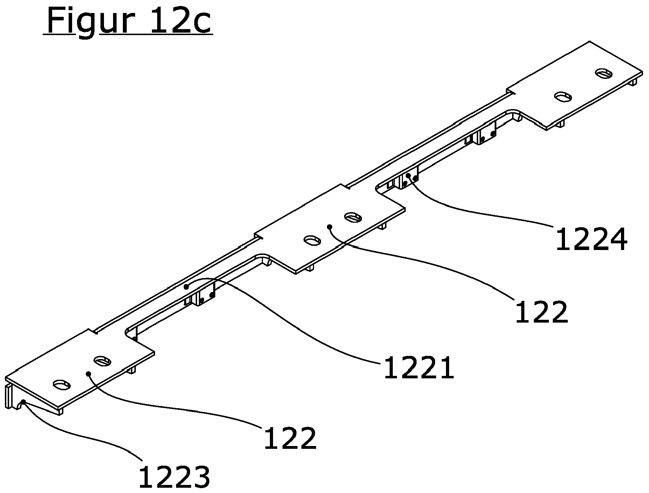

Figur 12 a eine Draufsicht auf das Blechbauteil, welches die Haltewinkel aufweist;
Figur 12 b eine Seitenansicht des Blechbauteils von Figur 12 a;
Figur 12 c eine perspektivische Ansicht des Blechbauteils von Figur 12 a;

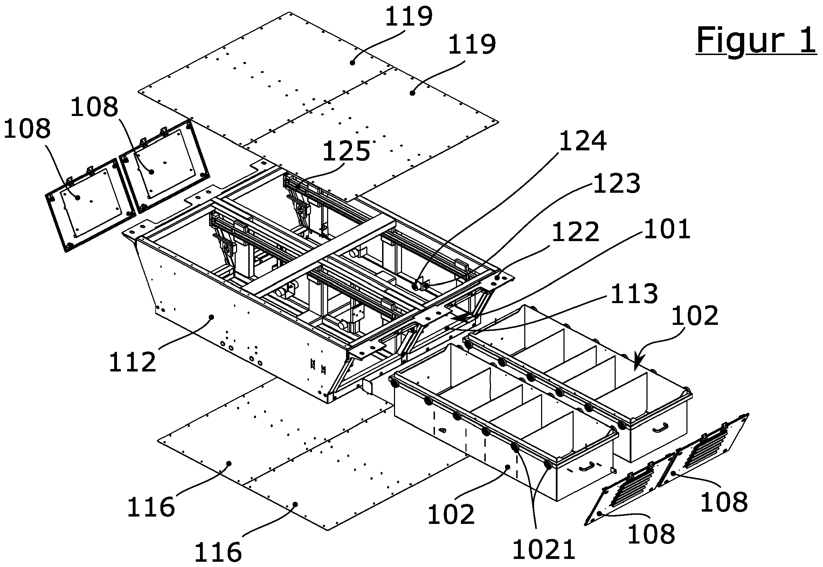

Zunächst wird auf die Figur 1 Bezug genommen, anhand derer nachfolgend die wesentlichen Elemente eines erfindungsgemäßen Aufnahmebehälters 100 (Batteriecontainer) näher erläutert werden. Der Aufnahmebehälter 100 nimmt zwei etwa kastenförmige Batterietröge 102 auf, die über zwei Öffnungen 101 an einer Querseite in den Aufnahmebehälter 100 einschiebbar sind, wobei diese Öffnungen 101 jeweils ringsum von etwa rechteckigen Türrahmen 113, 114 begrenzt werden. Nach dem Einschieben der Batterietröge 102 in den Aufnahmebehälter 100 sind die querseitigen Öffnungen 101 jeweils über Klappen 108 verschließbar. Die Batterietröge 102 sind durch Querwände in mehrere Kammern unterteilt, so dass sie mehrere Batterien oder andere elektrische oder elektronische Geräte oder Komponenten aufnehmen können. Oberseitig ist der Aufnahmebehälter 100 über zwei Deckelbleche 119 abgedeckt. Unterseitig ist der Aufnahmebehälter 100 über zwei Bodenbleche 116 verschlossen. An den Längsseiten befinden sich trapezförmige Seitenbleche 112, über die der Korpus an den Längsseiten vollständig flächig geschlossen ist. Der Korpus des Aufnahmebehälters 100 hat somit insgesamt die Grundform eines Prismas mit trapezförmiger Grundfläche, wobei in diesem Fall eine der Seitenflächen die trapezförmige Grundfläche bildet, während die Bodenfläche, die Deckelfläche und die beiden querseitigen Flächen Rechtecke sind.

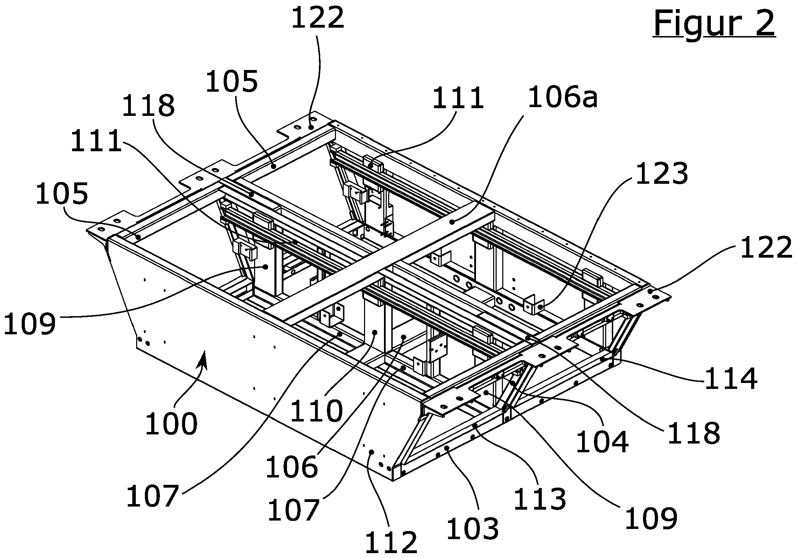

Weitere Einzelheiten des erfindungsgemäßen Aufnahmebehälters 100 ergeben sich aus der Figur 2, auf die nachfolgend Bezug genommen wird. In Figur 2 wurden die Deckelbleche 119, die Klappen 108 und die Batterietröge 102 entfernt, so dass man die Strebenkonstruktion im Inneren des Aufnahmebehälters 100 besser erkennen kann. Der erfindungsgemäße Aufnahmebehälter gemäß Figur 2 umfasst ein Grundgerüst, welches als Blechprofilschalengerippe mit Streben und Profilen zur Verstärkung ausgeführt ist. Dabei werden Biegeprofile miteinander verschweißt, die beispielsweise auf einer Stanz-Laser-Maschine gefertigt werden können und daher keine nachträgliche mechanische Bearbeitung erfordern. Der Aufnahmebehälter (Batteriecontainer) 100 umfasst einen Korpus mit im Umriss trapezförmigen Seitenwänden 112 an der Längsseite, die jeweils oben und unten nach einwärts hin abgekantet werden. Zur Verstärkung der Blechschalen sind diverse Streben und Profile vorgesehen. An der Querseite, die in Figur 2 offen ist, so dass die Batterietröge (siehe Figur 1) eingeschoben werden können, ist jeweils eine untere Querstrebe 103 vorgesehen, von der ausgehend ein Mittenprofil 104 im stumpfen Winkel (wegen der Trapezform des Aufnahmebehälters) nach oben hin führt, das in seinem oberen Endbereich wiederum mit oberen Querstreben 105 verbunden ist, die man in Figur 2 besser an der gegenüberliegenden Querseite erkennen kann. Die obere Querstrebe 105 ist mittig unterbrochen, so dass über die Breite des Aufnahmebehälters 100 zwei obere Querstreben 105 vorhanden sind, die miteinander fluchten, während die untere Querstrebe 103 jeweils über die Breite des Aufnahmebehälters 100 in Querrichtung durchgeht. Von dem Mittenprofil 104 gehen zwei untere Längsstreben 107 aus, die mittig unten in Längsrichtung des Aufnahmebehälters 100 und horizontal verlaufen. Die eine untere Längsstrebe 107 erstreckt sich nur von dem Mittenprofil 104 der Querwand bis zu einer inneren vertikalen Mittelstrebe 110, also nur über etwa die Hälfte der gesamten Länge des Aufnahmebehälters 100, während eine zweite untere Längsstrebe 107 von der inneren Mittelstrebe 110 bis zur gegenüberliegenden Querseite verläuft, wobei beide untere Längsstreben 107 miteinander fluchten. Außer der vertikalen inneren Mittelstrebe 110 sind noch zwei zu dieser parallele äußere vertikale Mittelstreben 109 vorhanden, die etwa in der Nähe der jeweiligen Querseiten des Aufnahmebehälters 100 angeordnet sind und mit der inneren vertikalen Mittelstrebe 110 in einer Flucht liegen.

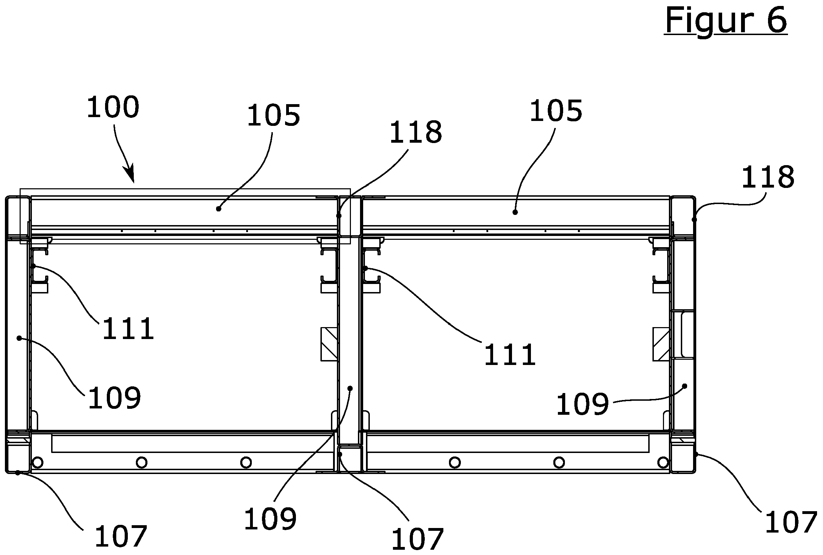

In einem etwa mittleren Bereich (in Längsrichtung gesehen) verläuft weiterhin horizontal eine untere mittlere Querstrebe 106, die mit dem unteren Ende der inneren vertikalen Mittelstrebe 110 verbunden ist. Oberhalb der unteren mittleren Querstrebe ist eine horizontale obere mittlere Querstrebe 106 a vorgesehen, die mit dem oberen Ende der inneren vertikalen Mittelstrebe 100 verbunden ist. Außerdem sind obere mittlere Längsstreben 118 vorhanden, die horizontal verlaufen von der oberen Querstrebe 105 an der einen Querseite ausgehend bis zur anderen oberen Querstrebe an der gegenüberliegenden Querseite. Etwas unterhalb dieser oberen horizontalen mittleren Längsstrebe 118 und auch unterhalb von zu dieser parallelen oberen horizontalen Längsstrebe im äußeren Bereich (siehe auch Figur 6) erstrecken sich jeweils C-Schienen 111, die jeweils seitlich an den vertikalen Mittelstreben 109, 110 verlaufen.

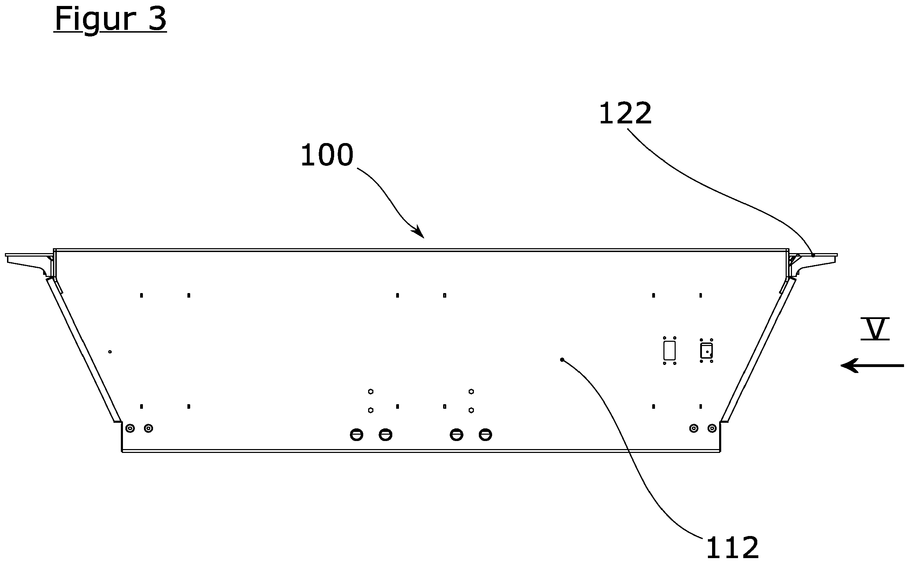

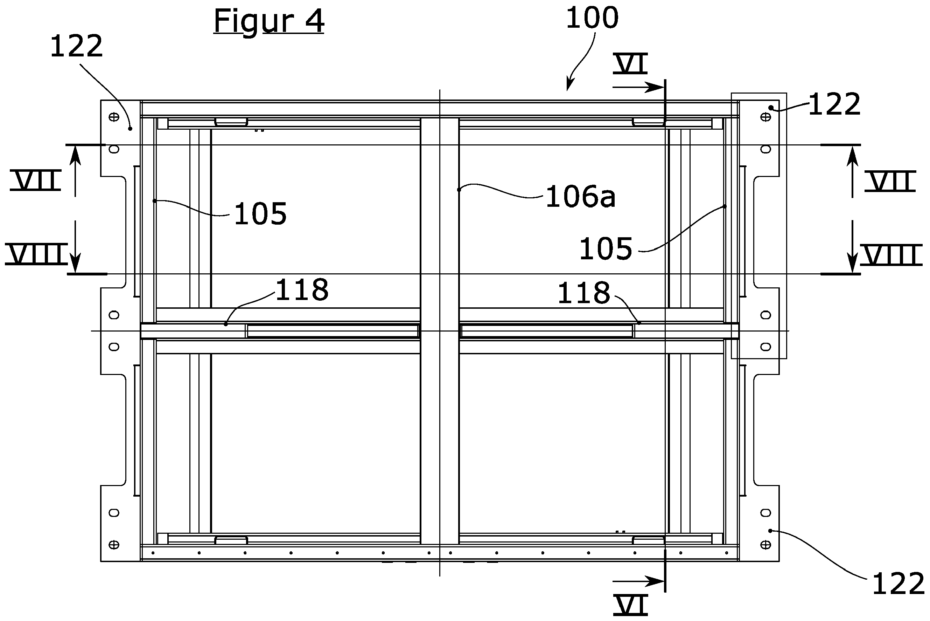

Weitere Details betreffend die diversen Streben und Profile, die den Rahmen des Aufnahmebehälters bilden, ergeben sich aus den verschiedenen Ansichten und Schnittansichten. Dabei zeigt Figur 3 einen Längsschnitt durch das Blechschalengerippe des Aufnahmebehälters 100, aus der man die Trapezform eines der Seitenbleche 112 der Längsseite erkennt sowie die geneigte Form an den Querseiten, wo die Türrahmen aufgenommen werden. Außerdem sind die oberen horizontalen Haltewinkel 122 erkennbar, von denen sich je drei an jeder der Querseiten befinden, nämlich jeweils in den vier oberen Eckbereichen des Aufnahmebehälters 100 und je einer dazwischen etwa in der Mitte der Querseite, wie man auch gut aus Figur 4 erkennen kann. Die Haltewinkel 122 sind jeweils mit Löchern versehen, so dass man den Aufnahmebehälter über die Haltewinkel 122 am Unterbau eines Schienenfahrzeugs befestigen kann.

In der Draufsicht auf den Aufnahmebehälter 100 gemäß Figur 4 erkennt man die Streben des oberen Rahmens des Aufnahmebehälters 100, nämlich die oberen Querstreben 105 an den beiden Querseiten, die oberen mittleren Längsstreben 118 und die obere mittlere Querstrebe 106 a, die etwas breiter dimensioniert ist als die vorgenannten oberen Streben. Außerdem ist die Form der oberen Haltewinkel 122, die sich an den Querseiten befinden und die an den oberen horizontalen Querstreben 105 angebracht sind, erkennbar. Diese Haltewinkel 122 haben eine etwa vertikale Fläche, mit der sie an dem Korpus des Aufnahmebehälters, insbesondere im Bereich der oberen horizontalen Querstreben 105 befestigt sind und sie haben horizontal nach außen ragende Flächen nach Art von Laschen, welche Löcher aufweisen und für die Befestigung des Aufnahmebehälters 100 an der Unterkonstruktion eines Schienenfahrzeugs dienen.

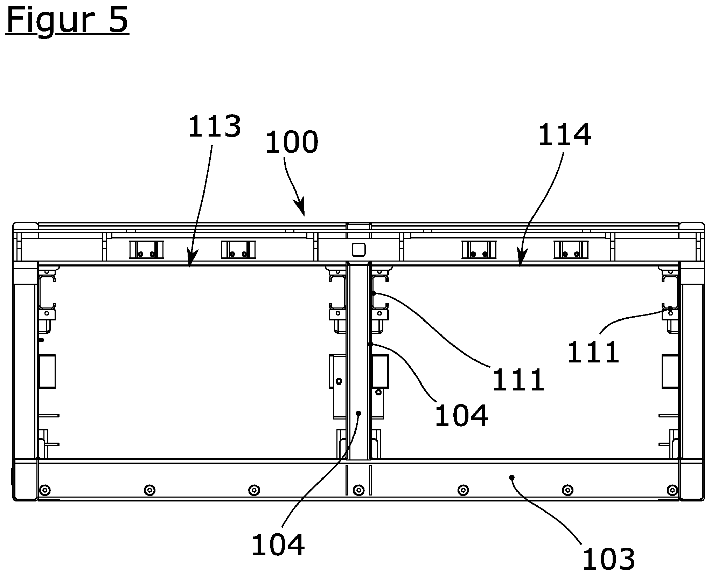

Die Ansicht auf die Querseite ist in Figur 5 dargestellt. Hier kann man das schräg nach oben verlaufenden Mittenprofil 104 sehen und die Position der oben bereits erwähnten C-Schienen 111, von denen zwei im mittleren Bereich etwas unterhalb des oberen Rahmens des Aufnahmebehälters 100 verlaufen, in zueinander spiegelbildlicher Anordnung, so dass sie mit ihrer offenen Profilseite jeweils nach außen hin gerichtet sind und jeweils eine C-Schiene 111 ist an beiden Seiten im äußeren Bereich nahe des äußeren Rahmens angeordnet, wobei diese beiden C-Schienen 111 jeweils mit ihrer offenen Profilseite nach innen hin gerichtet sind. An den Batterietrögen 102, die in der Figur 1 dargestellt sind, befinden sich an den Längsseiten jeweils mehrere Rollen 1021, die beim Einschieben der Batterietröge 102 in den C-Schienen 111 geführt werden. In Figur 5 erkennt man außerdem die beiden rechteckigen Türrahmen 113, 114 für die Klappen 108, mit denen die Öffnungen, über die die Batterietröge eingeschoben werden, verschlossen werden können (siehe auch Figur 1).

In der innen liegenden Querschnittsansicht gemäß Figur 6 erkennt man eine der äußeren vertikalen Mittelstreben 109, die als rechteckiges Kastenprofil ausgeführt sind (siehe auch Figur 2). Außerdem sind die beiden oberen Längsstreben 118 zu sehen, die jeweils rechts und links im äußeren Bereich horizontal verlaufen, sowie die obere mittlere Längsstrebe 118, die horizontal im mittleren Bereich in Längsrichtung parallel zu den beiden äußeren oberen Längsstreben verläuft. Außerdem sieht man in Figur 6 auch die vier C-Schienen 111, die für die Aufnahme der Batterietröge 102 dienen und sich im Wesentlichen über die gesamte Länge des Aufnahmebehälters 100 erstrecken, wobei diese etwas unterhalb der oberen Längsstreben 118 und zu diesen jeweils seitlich versetzt angeordnet sind. Weiterhin ist in Figur 6 die untere mittlere Längsstrebe 107 erkennbar, die im unteren Bereich des Aufnahmebehälters etwa mittig in Längsrichtung horizontal verläuft und mit dem unteren Ende der vertikalen Mittelstrebe 109 verbunden ist. Parallel zu dieser unteren horizontalen mittleren Längsstrebe 107 verlaufen jeweils im äußeren Bereich an beiden Seiten des Aufnahmebehälters ebenfalls jeweils äußere untere horizontale Längsstreben 107, die jeweils bevorzugt als Rechteckprofile ausgebildet sind.

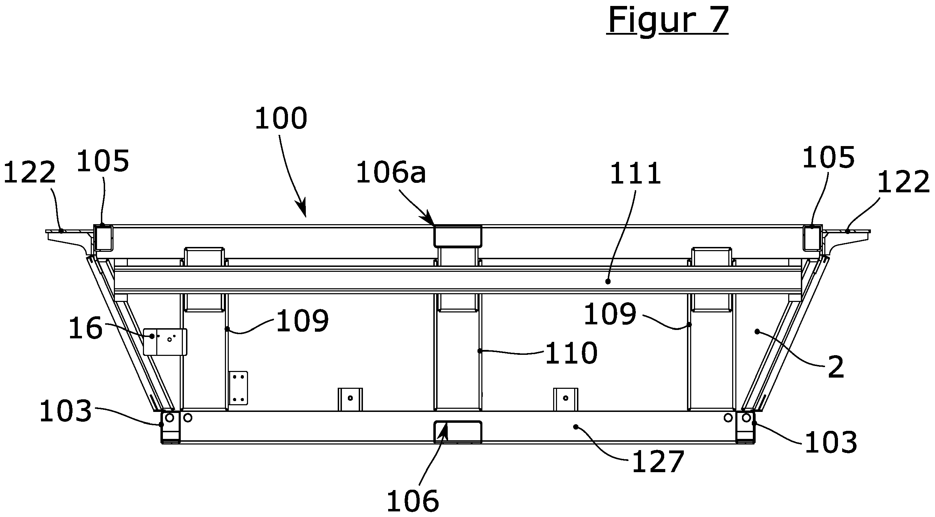

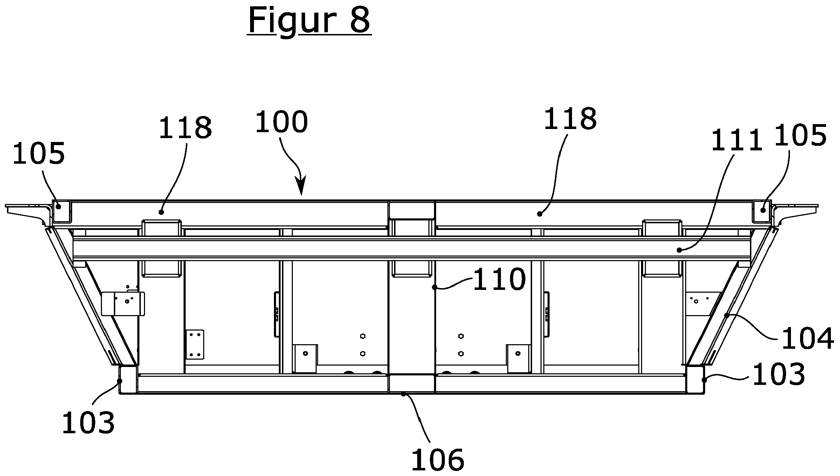

Die beiden Figuren 7 und 8 zeigen jeweils Längsschnitte durch den Aufnahmebehälter, die in der Figur 4 eingezeichnet sind. In der Ansicht gemäß Figur 7 schaut man in Richtung auf eine der äußeren Seitenwände des Aufnahmebehälters, während man in der Ansicht gemäß Figur 8 in Richtung auf den mittleren Bereich des Aufnahmebehälters 100 schaut. In beiden Ansichten erkennt man jeweils eine der in Längsrichtung verlaufenden C-Schienen 111. In Figur 7 sieht man weiterhin die obere mittlere Querstrebe 106 a, die vorzugsweise aus einem liegenden Rechteckprofil besteht, sowie die beiden oberen Querstreben 105, die horizontal außen im Bereich der Querseiten verlaufen und vorzugsweise schmaler ausgeführt sein können als die obere mittlere Querstrebe 106 a. An diesen beiden äußeren oberen Querstreben 105 können außenseitig die Haltewinkel 122 angeschweißt sein. Außerdem kann man in Figur 8 die beiden äußeren vertikalen Mittelstreben 109 und die innere vertikale Mittelstrebe 110 sehen. Weiterhin ist die untere mittlere Querstrebe 106 erkennbar, die parallel zu der oberen mittleren Querstrebe 106 a im unteren Bereich des Aufnahmebehälters 100 verläuft. Im äußeren Bereich verlaufen unten ebenfalls jeweils untere horizontale Querstreben 103, die ebenfalls Rechteckprofile sein können und schmaler ausgeführt werden können als die untere mittlere Querstrebe 106 und die hochkant angeordnet sein können, wie man aus Figur 8 erkennt. In Figur 8 sieht man außerdem das von unten nach oben schräg nach außen verlaufende Mittenprofil 104, welches an seinem unteren Ende mit der unteren horizontalen Querstrebe 103 verbunden ist und welches an seinem oberen Ende bis zu der oberen mittleren Längsstrebe 118 reicht.

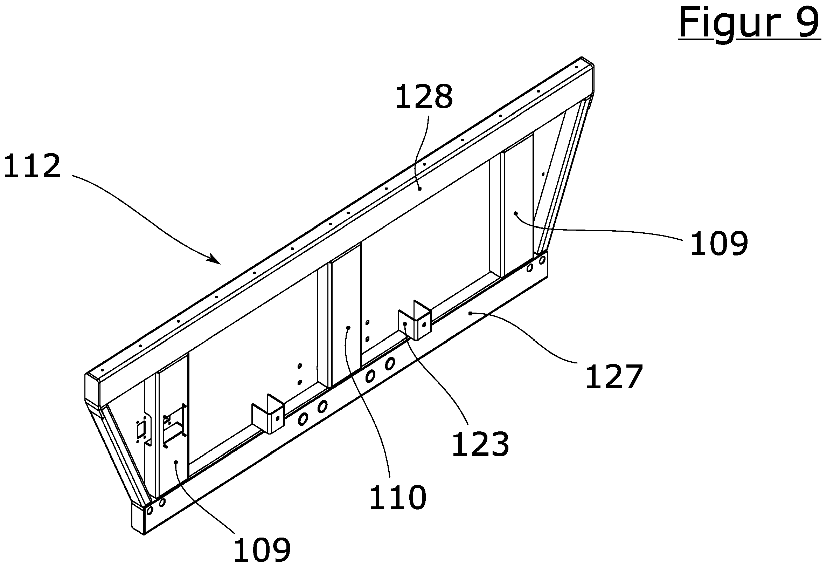

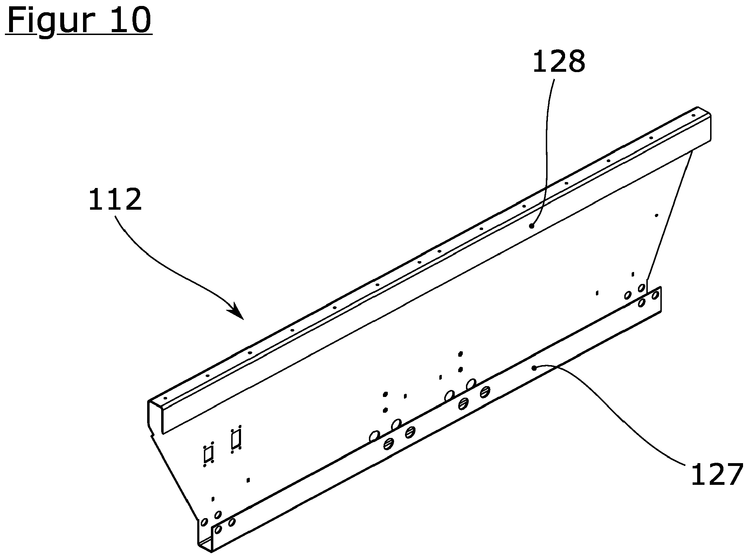

Nachfolgend wird auf die Figuren 9 und 10 Bezug genommen. Figur 9 zeigt noch einmal das trapezförmige Seitenteil 112 der Längsseite des Aufnahmebehälters mit den entsprechenden Streben für sich allein, so dass man die Position der Streben im Bereich des Seitenteils 112 an der Längsseite genauer erkennen kann. Figur 10 zeigt das gleiche trapezförmige Seitenteil wie in Figur 9, jedoch ohne die Streben, so dass man die Kantung des Seitenteilblechs erkennen kann. Man sieht in Figur 9, dass sich außen im Bereich der Seitenwand ebenfalls drei vertikale Streben befinden, nämlich zwei äußere vertikale Streben 109 und eine innere vertikale Strebe 110 (siehe auch Figur 7), wobei diese vertikalen Streben im Bereich der Seitenwand jeweils in einer Reihe stehen und jeweils parallel zu und in den entsprechenden Positionen stehen wie die drei vertikalen Mittelstreben 109, 110, die in einer mittleren Längsreihe des Aufnahmebehälters positioniert sind (siehe auch Figur 8). Weiterhin erkennt man, dass die drei vertikalen Streben der Seitenwand in ihrem unteren Bereich jeweils mit einem unteren horizontalen, oberseitig offenen Längsprofil 127 verbunden sind, welches durch zweifaches rechtwinkliges Abkanten des Seitenwandblechs entstanden ist, wie man durch den Vergleich mit Figur 10 gut erkennen kann. In ähnlicher Weise sind die drei vertikalen Streben 109, 110 der Seitenwand in ihrem oberen Bereich jeweils mit einem oberen horizontalen, unterseitig offenen Längsprofil 128 verbunden, welches durch zweifaches rechtwinkliges Abkanten des Seitenwandblechs in seinem oberen Bereich entstanden ist, wie man ebenfalls in Figur 10 sieht.

In Figur 9 kann man weiterhin erkennen, dass an dem oberseitig offenen unteren horizontalen Längsprofil 127 zwei Halter 123 in Form von U-Blechen befestigt sind, wobei an diesen Haltern jeweils Gummipuffer angebracht werden (nicht dargestellt), die dazu dienen, Schwingungen der eingeschobenen Batterietröge 102 während der Fahrt aufzunehmen. In Figur 1 sind die Gummipuffer 124 an diesen Haltern 123 dargestellt und man erkennt hier auch, dass nicht nur an den beiden Seiten, sondern zusätzlich auch im mittleren unteren Bereich solche Halter mit Gummipuffern 124 vorhanden sind, die jeweils bei eingeschobenen Batterietrögen 102 im unteren Bereich seitlich neben den Batterietrögen liegen. Außerdem sind mehrere Vorlegschuhe 125 vorgesehen, die zur Sicherung der Batterietröge vor dem Herausrollen dienen. Diese Vorlegschuhe 125 sind beispielsweise als gekantetes Blech ausgeführt, an dem stirnseitig ein zusätzliches Blech angenietet ist, welches den Schrauben als Verliersicherung dient. An die C-Schienen 111 werden Anschläge geschweißt, an die der Vorlegschuh 125 angeschraubt werden kann.

Ein Vorlegschuh 125 ist in den Figuren 11a, 11b und 11 c als Einzelheit dargestellt. Er umfasst ein in horizontaler Richtung vorstehendes Einschubteil 1251, welches in der montierten Position in die C-Schiene 111 hineinragt und welches an seinem der C-Schiene abgewandten Ende mit einer ersten Platte 1252 verbunden ist, die sich senkrecht zu der Richtung des Einschubteils 1251 und der Führungsrichtung der C-Schiene 111 erstreckt. Außerdem ist mit etwas Abstand zu der ersten Platte 1252 eine zu dieser etwa parallele zweite Platte 1253 an dem Vorlegschuh 125 angebracht, die als Verliersicherung für die Schrauben 1254 dient, mittels derer der Vorlegschuh angeschraubt wird, wobei diese Schrauben 1254 sich durch Löcher in der ersten Platte 1252 hindurch erstrecken. Die Position eines in die C-Schiene 111 eingeschobenen Vorlegschuhs kann man in der Figur 1 erkennen.

Nachfolgend wird auf die Figuren 12 a, b und c Bezug genommen, in denen ein Blechbauteil dargestellt ist, welches an der Querseite des Aufnahmebehälters angebracht wird (siehe Figur 2) und welches mehrere der Haltewinkel 122 umfasst. Es handelt sich um ein gestanztes und gegebenenfalls geschweißtes Blechbauteil, welches einen horizontalen Schenkel umfasst sowie einen mit diesem verbundenen vertikalen Schenkel 1222. Der horizontale Schenkel weist jeweils zwischen den Haltewinkeln 122 schmalere Bereiche 1221 auf und ist dort, wo die laschenartigen Haltewinkel 122 ausgebildet sind, breiter. Zur Versteifung des Blechbauteils sind in dieses mehrere voneinander beabstandete Knotenbleche 1223 eingeschweißt, die jeweils mit dem horizontalen und mit dem vertikalen Schenkel 1222 verbunden sind. An dem vertikalen Schenkel 1222 können außerdem Scharnierhalter 1224 angebracht werden, die die Scharniere für die Befestigung der schwenkbaren Klappen 108 halten.

### Bezugszeichenliste

- 100: Aufnahmebehälter (Batteriecontainer)
- 101: Öffnungen
- 102: Batterietröge
- 1021: Rollen
- 103: untere Querstreben
- 104: Mittenprofil
- 105: obere Querstreben
- 106: untere mittlere Querstrebe
- 106 a: obere mittlere Querstrebe
- 107: untere Längsstreben
- 108: Klappen
- 109: äußere vertikale Mittelstrebe
- 110: innere vertikale Mittelstrebe
- 111: C-Schiene
- 112: trapezförmige Seitenbleche
- 113: Türrahmen
- 114: Türrahmen
- 116: Bodenbleche
- 118: obere (mittlere) Längsstrebe
- 119: Deckelbleche
- 122: Haltewinkel
- 1221: schmalere Bereiche
- 1222: vertikaler Schenkel
- 1223: Knotenbleche
- 1224: Scharnierhalter
- 123: Halter für Gummipuffer
- 124: Gummipuffer
- 125: Vorlegschuhe
- 1251: Einschubteil
- 1252: erste Platte
- 1253: zweite Platte
- 1254: Schrauben
- 127: oberseitiges offenes Längsprofil, Abkantung
- 128: unterseitig offenes Längsprofil, Abkantung

## Patentansprüche

1. Aufnahmebehälter für elektrische Komponenten, welcher in einem unterseitigen Bereich eines Schienenfahrzeugs anbringbar ist, wobei der Aufnahmebehälter einen Blechkorpus umfasst mit einer Längsseite und einer schmaleren Querseite, wobei dieser Blechkorpus durch Längsstreben und Querstreben verstärkt ist und wobei der Innenraum des Aufnahmebehälters ein Aufnahmevolumen bildet, welches über Öffnungen zugänglich ist, die über Klappen oder dergleichen verschließbar sind, **dadurch gekennzeichnet, dass** die Öffnungen an der schmaleren Querseite vorgesehen sind.

2. Aufnahmebehälter nach Anspruch 1, **dadurch gekennzeichnet, dass** die Seitenwände an der Längsseite einen etwa trapezförmigen, sich nach oben hin verbreiternden Umriss aufweisen.

3. Aufnahmebehälter nach einem der Ansprüche 1 oder 2, **dadurch gekennzeichnet, dass** der Aufnahmebehälter durch mindestens eine im Innenraum angeordnete vertikale Strebe (109, 110) verstärkt ist, welche von den Längsseitenwänden des Aufnahmebehälters beabstandet ist, vorzugsweise durch zwei oder mehrere zueinander parallele, beabstandete vertikale Streben, die in einer Längsreihe angeordnet sind.

4. Aufnahmebehälter nach Anspruch 3, **dadurch gekennzeichnet, dass** mindestens eine im Innenraum angeordnete vertikale Strebe (109, 110) mit einer unteren horizontalen Querstrebe (106) und/oder mit einer oberen horizontalen Querstrebe (106 a) des Aufnahmebehälters (100) verbunden ist.

5. Aufnahmebehälter nach einem der Ansprüche 1 bis 4, **dadurch gekennzeichnet, dass** Seitenwände (112) an den Längsseiten des Aufnahmebehälters geschlossene Bleche umfassen, welche im oberen Endbereich und/oder im unteren Endbereich jeweils zweifach rechtwinklig zu Längsprofilen (127, 128) abgekantet sind.

6. Aufnahmebehälter nach einem der Ansprüche 1 bis 5, **dadurch gekennzeichnet, dass** wenigstens eine im Innenraum angeordnete vertikale Strebe (109, 110) und/oder wenigstens eine untere oder obere horizontale Querstrebe (106, 106a) und/oder wenigstens eine untere oder obere horizontale Längsstrebe (107, 118) als Kastenprofil oder Rechteckprofil ausgeführt ist.

7. Aufnahmebehälter nach einem der Ansprüche 1 bis 6, **dadurch gekennzeichnet, dass** an der schmaleren Querseite vorzugsweise etwa rechteckige Türrahmen (113, 114) eingelassen sind, die über vorzugsweise schwenkbare Klappen (108) verschließbar sind.

8. Aufnahmebehälter nach einem der Ansprüche 1 bis 7, **dadurch gekennzeichnet, dass** an den Querseiten obere horizontale Querstreben (105) angeordnet sind, an denen Haltewinkel (122) mit horizontal nach außen ragenden Flächen angebracht sind, welche für die Befestigung an dem Schienenfahrzeug dienen.

9. Aufnahmebehälter nach einem der Ansprüche 1 bis 8, **dadurch gekennzeichnet, dass** insgesamt wenigstens vier Haltewinkel (122) an den Querseiten jeweils in den Eckbereichen des Aufnahmebehälters (100) angeordnet sind, vorzugsweise insgesamt sechs Haltewinkel (122), wobei insbesondere jeweils zwei oder drei Haltewinkel in einer Reihe liegend an je einer Querseite des Aufnahmebehälters angeordnet sind.

10. Aufnahmebehälter nach Anspruch 9, **dadurch gekennzeichnet, dass** an einer Querseite des Aufnahmebehälters (100) ein weitgehend über die Erstreckung der Querseite durchgehendes gestanztes Blechbauteil vorgesehen ist, welches mehrere, vorzugsweise alle Haltewinkel (122) dieser Querseite umfasst und welches einen horizontalen Schenkel aufweist, an dem die Haltewinkel (122) ausgebildet sind, sowie einen mit diesem verbundenen vertikalen Schenkel (1222), wobei der horizontale Schenkel schmalere Bereiche (1221) aufweist, die jeweils zwischen zwei Haltewinkeln (122) liegen.

11. Aufnahmebehälter nach einem der Ansprüche 1 bis 10, **dadurch gekennzeichnet, dass** im Inneren des Aufnahmebehälters (100) sich in Längsrichtung des Aufnahmebehälters (100) erstreckende horizontale C-Schienen (111) angeordnet sind, in die Batterietröge (102) einschiebbar sind, für die die C-Schienen (111) als Führung dienen.

12. Aufnahmebehälter nach Anspruch 11, **dadurch gekennzeichnet, dass** wenigstens eine C-Schiene (111) an wenigstens einer vertikalen Mittelstrebe (109, 110) befestigt ist, wobei vorzugsweise zwei C.-Schienen (111) beidseitig und zueinander spiegelverkehrt an wenigstens einer vertikalen Mittelstrebe (109, 110) befestigt sind.

13. Aufnahmebehälter nach einem der Ansprüche 11 oder 12, **dadurch gekennzeichnet, dass** im Endbereich wenigstens einer horizontalen C-Schiene (111) ein Vorlegschuh (125) angeordnet ist, welcher zur Sicherung eines eingeschobenen Batterietrogs (102) dient und vorzugsweise teilweise in Längsrichtung in die C-Schiene (111) hineinragt.
